# EUROPEAN PATENT APPLICATION

(11) **EP 1 876 847 A1**
(43) Date of publication of application: **09.01.2008**
(21) Application number: 06300775.1
(22) Date of filing: 07.07.2006
(51) Int. Cl.: H04Q 7/36

(54) **A method for scheduling of user terminals in an SDMA capable radio communication network, a base station and a network therefor**

(71) Applicant: Alcatel Lucent, 75008 Paris (FR)
(72) Inventor: Wild, Thorsten, 70499 Stuttgart (DE); Hoek, Cornelis, 71732 Tamm (DE)
(74) Representative: Brose, Gerhard

(57) **Abstract**

The invention concerns a method for scheduling of user terminals (T1, T2) on an identical resource unit and on beams (1, 2, 3) for downlink transmission in an SDMA capable radio communication network whereby said beams (1, 2, 3) are precalculated and fixed before the scheduling, for each of said user terminals (T1, T2), an evaluation is performed with regard to which of said beams (1, 2, 3) is serving the respective user terminal best, a scheduling priority is assigned to each of said user terminals (T1, T2), and the user terminals (T1, T2) are scheduled in the order of their scheduling priority to the respective beam (1, 2, 3) that is serving the respective user terminal (T1, T2) best if no user terminal has been scheduled before to said respective, beam (1, 2, 3), a base station (BS) and a network (CN) therefor.

## Description

The invention relates to a method for scheduling of user terminals in a SDMA capable radio communication network according to the preamble of claim 1, a base station according to the preamble of claim 8, and a network according to the preamble of claim 9..

Space Division Multiple Access (SDMA) techniques make usage of the so-called smart antenna technology and spatial information of the location of user terminals within a cell. SDMA techniques are based on the spatial separation of users, enabling it to reuse the same frequency and the same time slot for two or more users under the condition that they are located in different directions from the base station and under the condition that the base station has multiple transmit antennas (or antenna array) for performing beamforming.

According to a common procedure, the radiation pattern of the base station, both in transmission and reception is adapted to each user terminal e.g. to obtain highest gain in the direction of the user terminal or to suppress unwanted interference. This is e.g. done using so-called phased array techniques.

In document "Adaptive Resource Allocation in SDMA-based Wireless Broadband Networks with OFDM Signaling" I. Koutsopoulos and L. Tassiulas, in Proc. of IEEE INFOCOM, June 2002, a solution for performing user allocation in a SDMA based system with high computational load by means of appropriately adjusting beamforming weights is described.

However, known procedures for adaptive beamforming require high feedback signaling overhead from the mobile terminal in order to calculate the spatial covariance matrix, which contains all the directional information of the mobile radio channel, and high effort for calculating transmit antenna weights.

The object of the invention is thus to propose a method for scheduling of user terminals in a SDMA capable radio communication network that requires less feedback signaling overhead and less calculating effort for calculating transmit antenna weights.

This object is achieved by a method according to the teaching of claim 1, a base station according to the teaching of claim 8, and a network according to the teaching of claim 9.

The main idea of the invention is to enable space division multiple access (SDMA) with a grid of fixed beams. This means re-using the same time-frequency resources for different user terminals by the help of spatial separation which can be exploited by a design of the antenna weights that is precalculated before the scheduling of said user terminals on the time-frequency resources. A set of appropriate user terminals, which can be separated spatially, for one time-frequency resource unit is selected, considering also the scheduling requirements of the user terminals.

In already existing SDMA capable radio communication networks, per sector and per time, frequency or code resource unit just one of the beams is used for data transmission. The invention now uses multiple beams to different users for the same resource unit by exploiting the spatial separation of user terminals.

The method according to the invention has the additional advantage that no dedicated pilot symbols are required and thus the method can rely on common pilots per antenna or per beam. This is due to the fact that the channel estimation needs to estimate the joint impact of the raw channel without usage of transmit weights and the transmit weights. Adaptive beams have arbitrary transmit weights and thus the pilots have to be transmitted with the same weights as the data. Such pilots are called dedicated pilots. On the contrary for fixed beams the set of possible weights is already known at both ends of the link. If the number of beams is small, the pilots can be transmitted orthogonally for each beam e.g. in OFDM systems (OFDM = orthogonal frequency division multiplexing) and so-called common pilots per beam can be used. If the number of beams is large, the pilots should be orthogonal for each antenna and so-called common pilots per antenna are used. For the latter the channel estimator has to combine the raw channel from the common pilots per antenna with the set of weights to get the effective channel of each beam. E.g. in OFDM systems with frequency selective scheduling the advantage is to achieve a full band interpolation gain.

Additionally more resources like e.g. energy can be spent on common pilots as they can be used by all users instead of being only useful for one user in the case of dedicated pilots. So this is an additional advantage of fixed beams compared to adaptive beams.

Further developments of the invention can be gathered from the dependent claims and the following description.

In the following the invention will be explained further making reference to the attached drawings.
Fig. 1 schematically shows a network in which the invention can be implemented.
Fig. 2 schematically shows exemplarily the gain plotted against the angular range for a grid of 11 beams in a 120° sector.

A network according to the invention comprises user terminals and base stations with at least two antennas.

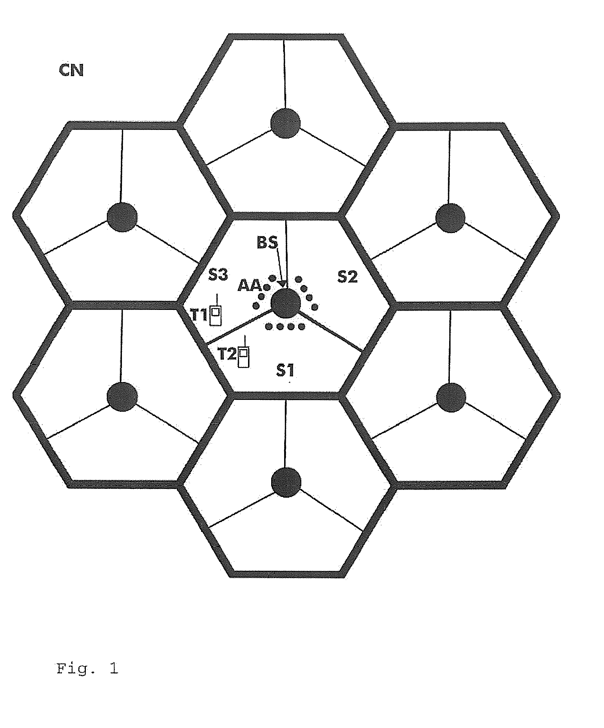

Fig. 1 shows an example for such a network CN that comprises base stations BS, user terminals T1, T2 and antenna arrays AA. The network according to the example is a cellular network with cells that are divided into sectors S1-S3.

Each of said user terminals T1, T2 is connected to one or a multiple of said base stations BS, and the base stations BS are in turn connected to a core network which is not shown in fig. 1 for the sake of simplicity.

The user terminals T1, T2 comprise the functionality of a user terminal for transmission and reception in an SDMA capable radio communication network, i.e. they can be connected to a network by means of a base station.

The base stations BS comprise the functionality of a base station af a SDMA capable radio communication network, i.e. they provide the possibility for user terminals to get connected to a network.

The base stations BS comprise at least two antennas AA for sending to or receiving from user terminals T1, T2 signals or data.

Furthermore, a base station BS according to the invention comprises means for scheduling of user terminals on an identical resource unit and on beams for downlink transmission in a SDMA capable radio communication network, whereby said base station BS comprises at least one processing means adapted to perform for each of said user terminals an evaluation with regard to which of said beams is serving the respective user terminal best, adapted to perform an assignment of a scheduling priority to each of said user terminals, and adapted to perform scheduling of the user terminals in the order of their scheduling priority to the respective beam that is serving the respective user terminal best if no user terminal, has been scheduled before to said respective beam.

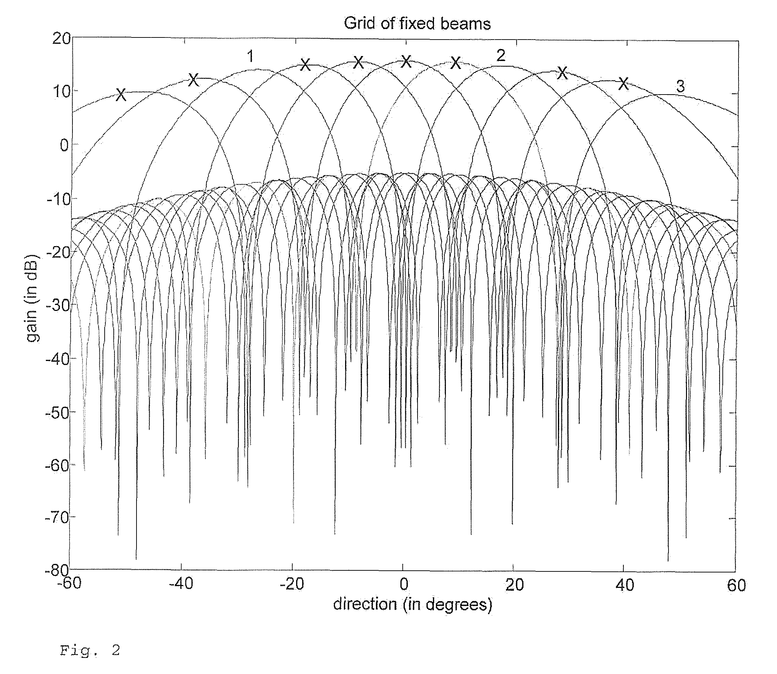

In the following, by way of example the method according to the invention is described in detail making reference to figs. 1 and 2 .

Fig. 2 shows the gain plotted against the angular range for a grid of 11 precalculated fixed beams in a 120° sector.

A base station BS uses said precalculated fixed beams for downlink transmission on resource units. Such a resource unit is e.g. a code, a frequency or a time slot. An evaluation must be performed for each of said user terminals T1, T2 with regard to which of said beams is serving the respective user terminal best. Such an evaluation can e.g. be based on a signal to interference ratio, an achievable quality of service or an error rate.

In an embodiment, the result of said evaluation is transmitted from each of said user terminals T1, T2 by uplink feedback signaling, i.e. each of said user terminals T1, T2 transmits which of said beams is serving it best.

In a further embodiment, an estimation of direction of arrival of uplink transmission from each of said user terminals T1, T2 is performed. The beam with the angular range that is closest to the direction of arrival of uplink transmission is assumed to serve the respective user terminal best.

A scheduling priority is assigned to each of said user terminals T1, T2 determining the order of the assignment of user terminals T1, T2 to beams.

In a preferred embodiment, an indication of the channel quality of the user terminals T1, T2 is used for determination of the scheduling priority, and for best performance preferably this channel quality is updated on a fast fading granularity, i.e. the updating of the channel quality is performed on the same time scale as the fast fading of the channel.

The user terminals T1, T2 are scheduled in the order of their scheduling priority to the respective beam that is serving the respective user terminal best. However, for each resource unit only one user terminal is scheduled on a beam, i.e. if there are user terminals with the same beam that is serving them best on a resource unit, only the user terminal with the highest scheduling priority is scheduled to the beam.

Neighboured beams normally cannot be used for simultaneous transmission due to mutual cross-talk between beams resulting in high interference at the user terminal T1, T2.

So in an embodiment of the invention, one or several beams neighbored to a certain beam are blocked for transmission using a dedicated resource unit when said certain beam is already selected for transmission using said dedicated resource unit .

In an embodiment of the invention, the amount of beams or the number of blocked beams are matched to the propagation environment of the respective base station. E.g. in a wide area cell with low angular spread of a propagation channel only one beam has to be blocked, whereas in urban environments 2 blocked beams are required and in micro cells 3 blocked beams are necessary, which of course limits the number of possible spatial streams of user data.

Another degree of freedom for the optimization with respect to each base station's deployment scenario is the maximum number of spatial streams of user data indicating how many users will be served simultaneously on an identical, resource unit. The higher the angular spread of a propagation channel in the scenario the less spatial streams of user data will be used.

So these three parameters amount of beams, number of blocked beams and maximum number of spatial streams can be optimized depending on each base station's deployment scenario. There are two options how this optimisation can be done:
Option A: Static parameter set
   In an embodiment of the invention, a static parameter set is adjusted e.g. as an operation and maintenance setting depending on the environment of each base station. Here the average situation of mutual cross-talk between beams shall be taken into account, thus e.g. differentiating between suburban macro cells, urban macro cells, micro cells, etc..
Option B: Dynamic parameter set, based on measurements
   In an embodiment of the invention, instead of using a predefined beam configuration the system sets the current grid of beams matched to the scenario based on the repeatedly signalled feedback of the user terminals. Said repeatedly signaled feedback from user terminals contains information e.g. about the beam that is serving the respective user terminal best and information about at least one additional beam, i.e. this feedback e.g. contains the long-term averaged ratio of received power of the best serving beam to its first neighbour beams, and if appropriate to its second and/or third neighbour beams. This information allows to detect mutual cross-talk between beams. Inside the base station certain thresholds can be stored for switching between different grids of beams, depending on this ratio of received power.

For scheduling, the invention contains a greedy user and beam selection scheme which will be explained in the next section.

One instance of the scheduling algorithm can be run per time, frequency or code resource unit, as e.g. a timeslot of a TDMA system (TDMA = Time Division Multiple Access or one spreading code in UMTS (UMTS = Universal Mobile Telecommunications System)..

For scheduling, a certain scheduling priority and several users who want to transmit data is assumed. Said Certain scheduling priority is e.g. based on channel quality, a score of a so-called score based scheduler, a random value e.g. for a kind of Round Robin scheduler or a more advanced scheduling algorithm which e.g. additionally takes into account also buffer status of a transmitting base station or a fairness principle.

The user and beam scheduling algorithm starts with the user terminal with the highest scheduling priority. This user terminal is selected with the beam that is serving it best. This information is e.g. obtained by uplink feedback signalling or an estimation of direction of arrival of uplink transmission. A certain amount of beams neighboured to said beam that is serving the user terminal best is blocked.

In the example depicted in fig. 2, said beam that is serving the user terminal with the highest scheduling priority best is marked with 1. Said beam is selected for data transmission, and the two beams on each side of said beam 1 indicated with a cross are blocked for transmission, so that four neighbouring beams are now blocked and won't be used for transmission within this certain resource unit.

Now the user terminal with the second highest scheduling priority is checked. If the beam that is serving the user terminal with the second highest scheduling priority best corresponds to a blocked beam or to the beam 1 that the user terminal with the highest scheduling priority has already been scheduled to, the user terminal with the second highest scheduling priority will be skipped for this resource unit. Otherwise the user terminal with the second highest scheduling priority is selected using the antenna weights of the beam that is serving it best for data transmission and again the two neighbour beams on each side of said beam that is serving it best are blocked.

In fig. 2, said beam that is serving the user terminal with the second highest scheduling priority best is marked with 2. Said beam is selected for data transmission, and the two beams on each side of said beam 2 indicated with a cross are blocked for transmission, so that four neighbouring beams are now blocked and won't be used for transmission within this certain resource unit.

This process is now repeated until the desired maximum number of spatial streams of user data is reached or all beams are blocked or all user terminals are checked.

In the example depicted in fig. 2, the beams indicated with 1, 2 and 3 are now used for simultaneous data transmission, on an identical resource unit in one sector, and the beams indicated with a cross are blocked.

## Claims

1. A method for scheduling of user terminals (T1, T2) on an identical resource unit and on beams (1, 2, 3) for downlink transmission in an SDMA capable radio communication network **characterized in,**
• **that** said beams (1, 2, 3) are precalculated and fixed before the scheduling,
• **that** for each of said user terminals (T1, T2), an evaluation is performed with regard to which of said beams (1, 2, 3) is serving the respective user terminal best,
• **that** a scheduling priority is assigned to each of said user terminals (T1, T2),
• and **that** the user terminals (T1, T2) are scheduled in the order of their scheduling priority to the respective beam (1, 2, 3) that is serving the respective user terminal (T1, T2) best if no user terminal has been scheduled before to said respective beam. (1, 2, 3).

2. A method according to claim 1, **characterized in, that** each of said user terminals (T1, T2) transmits by uplink feedback signaling which of said beams (1, 2, 3) is serving it best, or that an estimation of direction of arrival of uplink transmission from each of said user terminals (T1, T2) is performed.

3. A method according to claim 1, **characterized in, that** said scheduling priority is based on at least one of a channel quality, a score of a score based scheduler, a random value, a buffer status of a transmitting base station and a fairness principle.

4. A method according to claim 1, **characterized in, that** at least one beam neighbored to a beam (1, 2, 3) that a user terminal (T1, T2) has been scheduled to is blocked for transmission on said identical resource unit.

5. A method according to claim 4, **characterized in, that** the number of beams, the number of beams that are blocked for transmission or the maximum number of user terminals that are scheduled simultaneously on the identical resource unit are used as optimization parameters with respect, to each base station's deployment scenario.

6. A method according to claim 5, **characterized in, that** said optimization parameters build a static parameter set that is chosen based on an average situation of mutual crosstalk between beams.

7. A method according to claim 5, **characterized in, that** said optimization parameters build a dynamic parameter set that is chosen based on the repeatedly signaled feedback from user terminals containing information about the beam that is serving the respective user terminal best and information about at least one additional, beam.

8. A base station (BS) for scheduling of user terminals (T1, T2) on an identical resource unit and on beams (1, 2, 3) for downlink transmission in an SDMA capable radio communication network, **characterized in, that** said base station (BS) comprises at least one processing means
• adapted to perform for each of said user terminals (T1, T2) an evaluation with regard to which of said beams (1, 2, 3) is serving the respective user terminal best,
• adapted to perform an assignment of a scheduling priority to each of said user terminals (T1, T2),
• and adapted to perform scheduling of the user terminals (T1, T2) in the order of their scheduling priority to the respective beam (1, 2, 3) that is serving the respective user terminal best if no user terminal has been scheduled before to said respective beam (1, 2, 3) .

9. An SDMA capable radio communication network (CN) adapted for performing scheduling of user terminals (T1, T2) on an identical resource unit and on beams (1, 2 , 3 for downlink transmission **characterized in, that** said SDMA capable radio communication network comprises at least one base station (BS) comprising at least one processing means adapted to perform for each of said user terminals (T1, T2) an evaluation with regard to which of said beams (1, 2, 3) is serving the respective user terminal best, adapted to perform an assignment of a scheduling priority to each of said user terminals (T1, T2), and adapted to perform scheduling of the user terminals (T1, T2) in the order of their scheduling priority to the respective beam (1, 2, 3) that is serving the respective user terminal best if no user terminal has been scheduled before to said respective beam (1, 2, 3).
